# EUROPEAN PATENT APPLICATION

(11) **EP 4 699 879 A1**
(43) Date of publication of application: **25.02.2026**
(21) Application number: 25766858.2
(22) Date of filing: 10.04.2025
(51) Int. Cl.: B60W 20/10, B60W 20/50

(54) **VEHICLE CONTROL METHOD AND APPARATUS, AND STORAGE MEDIUM**

(30) Priority: 02.07.2024 CN 202410878490
(71) Applicant: Chery Automobile Co., Ltd., Wuhu, Anhui 241006 (CN)
(72) Inventor: DAI, Xiangting, Wuhu, Anhui 241006 (CN); QI, Keguang, Wuhu, Anhui 241006 (CN); CHEN, Zhen, Wuhu, Anhui 241006 (CN); ZHU, Zhiming, Wuhu, Anhui 241006 (CN)
(74) Representative: Yang, Shu
(86) International application number: PCT/CN2025/088355
(87) International publication number: WO 2026/007495

(57) **Abstract**

The present disclosure relates to the field of vehicle control technologies. Disclosed are a method and apparatus for controlling a vehicle, and a storage medium. The method includes: setting a target charging power of a power battery to 0 and performing rotational speed closed-loop control on an ISG motor with a first rotational speed as a target rotational speed in response to a fault level being a target level and a first detection result indicating that an engine and the ISG motor are in a series operating mode; controlling the power battery to be disconnected from a high-voltage circuit, performing rotational speed closed-loop control on the engine, and performing voltage closed-loop control on the ISG motor in response to an actual torque of the engine being less than 0 and a current of a direct current bus being less than a current threshold; and supplying power to a TM motor through the ISG motor. In this way, the stability of the voltage of the direct current bus can still be ensured in the case of disconnecting the power battery, thereby ensuring that the TM motor can still stably drive the vehicle to travel safely in the case that the power battery fails.

## Description

The present disclosure claims priority to Chinese Patent Application No. 202410878490.9, filed on July 02, 2024 and entitled "METHOD AND APPARATUS FOR CONTROLLING VEHICLE, AND STORAGE MEDIUM", the content of which is incorporated herein by reference in its entirety.

### TECHNICAL FIELD

Embodiments of the present disclosure relate to the field of vehicle control technologies, and in particular, to a method and apparatus for controlling a vehicle, and a storage medium.

### BACKGROUND

In the driving process of an extended-range vehicle, in the case that a power battery fails, the driving safety of the vehicle will be affected. In particular, in the case that a third-level fault occurs in the power battery, voltage of a direct current bus will be unstable, resulting in damage to high-voltage components or abnormal operation, which affects the driving safety of the vehicle.

In the related art, in the case that the power battery fails, the function of the power battery is replaced with a standby power energy storage to ensure the safe travel of the vehicle in a short time. In the related art, the complexity of a system, and the cost of production, research and development of a vehicle are increased.

### SUMMARY

Embodiments of the present disclosure provide a method and apparatus for controlling a vehicle, and a storage medium, which can be used to address a problem that the driving safety of a vehicle is affected in the case that a power battery fails. The technical solutions are as follows:

In one aspect, the embodiments of the present disclosure provide a method for controlling a vehicle. The method includes:
reading a fault level of a power battery of a vehicle in response to a fault in the power battery;
acquiring a first detection result in response to the fault level being a target level, wherein the first detection result indicates whether an operating mode of an engine and an integrated starter generator (ISG) motor of the vehicle is a series operating mode;
setting a target charging power of the power battery to 0 and performing rotational speed closed-loop control on the ISG motor with a first rotational speed as a target rotational speed, in response to the first detection result indicating that the operating mode of the engine and the ISG motor is the series operating mode, wherein the power battery is connected in a high-voltage circuit, and the target charging power is used for controlling an actual torque of the engine to gradually decrease;
detecting the actual torque of the engine and a current value of a direct current bus in the high-voltage circuit, wherein the direct current bus is configured to connect the power battery and the ISG motor;
controlling the power battery to be disconnected from the high-voltage circuit, performing the rotational speed closed-loop control on the engine and performing voltage closed-loop control on the ISG motor, in response to the actual torque of the engine being less than 0 and a current of the direct current bus being less than a current threshold; and
supplying power to a traction motor (TM) motor by the ISG motor, wherein the TM motor is configured to drive the vehicle to travel.

The embodiments of the present disclosure provide a method for controlling a vehicle. The method includes:
reading a fault level of a power battery of a vehicle in response to a fault in the power battery;
acquiring a first detection result in response to the fault level being a target level, wherein the first detection result is used to indicate whether an operating mode of an engine and an ISG motor of the vehicle is a series operating mode;
setting a target charging power of the power battery connected in a high-voltage circuit to 0 such that an actual torque of the engine gradually decreases, and performing rotational speed closed-loop control on the ISG motor with a rotational speed threshold as a target rotational speed, in response to the first detection result indicating that the operating mode of the engine and the ISG motor is the series operating mode;
detecting the actual torque of the engine and a current value of a direct current bus in the high-voltage circuit, wherein the direct current bus is configured to connect the power battery and the ISG motor;
controlling the power battery to be disconnected from the high-voltage circuit, performing the rotational speed closed-loop control on the engine and performing voltage closed-loop control on the ISG motor, in response to the actual torque of the engine being less than 0 and a current of the direct current bus being less than a current threshold; and
supplying power to a TM motor by the ISG motor, wherein the TM motor is configured to drive the vehicle to travel.

Optionally, after acquiring the first detection result, the method further includes:
acquiring a second detection result in response to the first detection result indicating that the operating mode of the engine and the ISG motor is not the series operating mode, wherein the second detection result is used to indicate whether the operating mode of the engine and the ISG motor is a parallel operating mode; and
switching the operating mode of the engine and the ISG motor to the series operating mode in response to the second detection result indicating that the operating mode of the engine and the ISG motor is the parallel operating mode.

Optionally, after acquiring the second detection result, the method further includes:
controlling the engine to start at low power in response to the second detection result indicating that the operating mode of the engine and the ISG motor is not the parallel operating mode.

Optionally, controlling the engine to start at low power, includes:
controlling the ISG motor to provide kinetic energy for the engine, such that a rotational speed of the engine reaches a minimum rotational speed at which fuel injection and ignition are maintained; and
controlling the fuel injection and ignition of the engine in response to the rotational speed of the engine reaching the minimum rotational speed at which the fuel injection and ignition are maintained.

Optionally, the method further includes:
limiting a maximum electric power consumption of the ISG motor to 5 kilowatts and a minimum recovery power to -20 kilowatts, in the case that the voltage closed-loop control is performed on the ISG motor.

Optionally, the method further includes:
limiting a minimum recovery power of the TM motor to 0 and limiting a maximum electric power consumption of the TM motor to a sum of a generated power of the ISG motor and an offset value, in the case that the TM motor is powered by the ISG motor.

In another aspect, an apparatus for controlling a vehicle is provided. The apparatus includes:
a reading module, configured to read a fault level of a power battery of a vehicle in response to a fault in the power battery;
an acquisition module, configured to acquire a first detection result in response to the fault level being a target level, wherein the first detection result indicates whether an operating mode of an engine and an ISG motor of the vehicle is a series operating mode;
a setting module, configured to set a target charging power of the power battery to 0 and perform rotational speed closed-loop control on the ISG motor with a first rotational speed as a target rotational speed, in response to the first detection result indicating that the operating mode of the engine and the ISG motor is the series operating mode, wherein the power battery is connected in a high-voltage circuit, and the target charging power is used for controlling an actual torque of the engine to gradually decrease;
a detection module, configured to detect the actual torque of the engine and a current value of a direct current bus in the high-voltage circuit, wherein the direct current bus is configured to connect the power battery and the ISG motor;
a control module, configured to control the power battery to be disconnected from the high-voltage circuit, perform the rotational speed closed-loop control on the engine, and perform voltage closed-loop control on the ISG motor, in response to the actual torque of the engine being less than 0 and a current of the direct current bus being less than a current threshold; and
a power supply module, configured to supply power to a TM motor by the ISG motor, wherein the TM motor is configured to drive the vehicle to travel.

In another aspect, an apparatus for controlling a vehicle is provided. The apparatus includes:
a reading module, configured to read a fault level of a power battery of a vehicle in response to a fault in the power battery;
an acquisition module, configured to acquire a first detection result in response to the fault level being a target level, wherein the first detection result is used to indicate whether an operating mode of an engine and an ISG motor of the vehicle is a series operating mode;
a setting module, configured to set a target charging power of the power battery connected in a high-voltage circuit to 0, such that an actual torque of the engine gradually decreases, and perform rotational speed closed-loop control on the ISG motor with a rotational speed threshold as a target rotational speed, in response to the first detection result indicating that the operating mode of the engine and the ISG motor is the series operating mode;
a detection module, configured to detect the actual torque of the engine and a current value of a direct current bus in the high-voltage circuit, wherein the direct current bus is configured to connect the power battery and the ISG motor;
a control module, configured to control the power battery to be disconnected from the high-voltage circuit, perform the rotational speed closed-loop control on the engine, and perform voltage closed-loop control on the ISG motor, in response to the actual torque of the engine being less than 0 and a current of the direct current bus being less than a current threshold; and
a power supply module, configured to supply power to a TM motor by the ISG motor, wherein the TM motor is configured to drive the vehicle to travel.

Optionally, the acquisition module is further configured to acquire a second detection result in response to the first detection result indicating that the operating mode of the engine and the ISG motor is not the series operating mode, wherein the second detection result is used to indicate whether the operating mode of the engine and the ISG motor is a parallel operating mode; and switch the operating mode of the engine and the ISG motor to the series operating mode in response to the second detection result indicating that the operating mode of the engine and the ISG motor is the parallel operating mode.

Optionally, the acquisition module is further configured to control the engine to start at low power in response to the second detection result indicating that the operating mode of the engine and the ISG motor is not the parallel operating mode.

Optionally, the acquisition module is configured to control the ISG motor to provide kinetic energy for the engine, such that a rotational speed of the engine reaches a minimum rotational speed at which fuel injection and ignition are maintained; and control the fuel injection and ignition of the engine in response to the rotational speed of the engine reaching the minimum rotational speed at which the fuel injection and ignition are maintained.

In some embodiments, the apparatus further includes a first limiting module, configured to limit a maximum electric power consumption of the ISG motor to 5 kilowatts and a minimum recovery power to -20 kilowatts, in the case that the voltage closed-loop control is performed on the ISG motor.

Optionally, a second limiting module, configured to limit a minimum recovery power of the TM motor to 0 and limit a maximum electric power consumption of the TM motor to a sum of a generated power of the ISG motor and an offset value in the case that the TM motor is powered by the ISG motor.

In another aspect, a non-transitory computer-readable storage medium is further provided. The computer-readable storage medium stores at least one computer program. The at least one computer program, when loaded and run by a processor, causes a computer to perform the method for controlling a vehicle as defined in any one of the above embodiments.

In another aspect, a computer program product is further provided. The computer program product includes computer instructions. The computer instructions, when loaded and executed by a processor, cause the processor to perform the steps of the method for controlling a vehicle as defined in any one of the above embodiments.

### BRIEF DESCRIPTION OF DRAWINGS

To describe the technical solutions in embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other accompanying drawings from these accompanying drawings without creative efforts.
FIG. 1 is a schematic diagram of an implementation environment according to some embodiments of the present disclosure;
FIG. 2 is a flowchart of a method for controlling a vehicle according to some embodiments of the present disclosure;
FIG. 3 is a schematic structural diagram of software for controlling a vehicle according to some embodiments of the present disclosure;
FIG. 4 is a schematic flowchart of software for controlling a vehicle according to some embodiments of the present disclosure;
FIG. 5 is a schematic diagram of vehicle control logic according to some embodiments of the present disclosure; and
FIG. 6 is a schematic structural diagram of an apparatus for controlling a vehicle according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings.

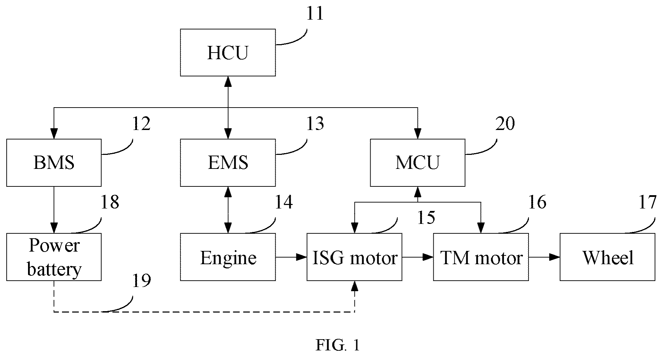

The embodiments of the present disclosure provide a method for controlling a vehicle. Referring to FIG. 1, it illustrates a schematic diagram of an implementation environment for the method according to some embodiments of the present disclosure. The implementation environment may include: a hybrid control unit (HCU) 11, a battery management system (BMS) 12, an engine management system (EMS) 13, an engine 14, an ISG motor 15, a TM motor 16, a wheel 17, a power battery 18, a direct current bus 19, and a motor control unit (MCU) 20.

Optionally, in response to a fault in the power battery 18 of a vehicle, the HCU 11 reads the fault level of the power battery 18 through the BMS 12. In response to the fault level being the target level, the HCU 11 acquires a first detection result, where the first detection result indicates whether the operating mode of the engine 14 and the ISG motor 15 of the vehicle is a series operating mode. In response to the first detection result indicating that the operating mode of the engine 14 and the ISG motor 15 is the series operating mode, the HCU 11 sets the target charging power of the power battery 18 connected in a high-voltage circuit to 0, such that the actual torque of the engine 14 gradually decreases, and performs rotational speed closed-loop control on the ISG motor 15 through the MCU 20 with a first rotational speed as the target rotational speed.

Exemplarily, the HCU 11 detects the actual torque of the engine 14 through the EMS 13. The HCU 11 detects the current value of the direct current bus 19 in the high-voltage circuit, where the direct current bus 19 is configured to connect the power battery 18 and the ISG motor 15. In response to the actual torque of the engine 14 being less than 0 and the current of the direct current bus being less than a current threshold, the HCU 11 controls the power battery 18 to be disconnected from the high-voltage circuit, and performs rotational speed closed-loop control on the engine 14 through the EMS 13. The HCU 11 performs voltage closed-loop control on the ISG motor 15 through the MCU 20. The HCU 11 supplies power to the TM motor 16 through the ISG motor 15, where the TM motor 16 is configured to drive the vehicle 17 of the vehicle, and both the TM motor 16 and the ISG motor 15 are controlled by the MCU 20. Optionally, the HCU 11, the BMS 12, the EMS 13, the engine 14, the ISG motor 15, the TM motor 16, the wheel 17, the power battery 18, the direct current bus 19, and the MCU 20 establish a communication connection through a wired or wireless network.

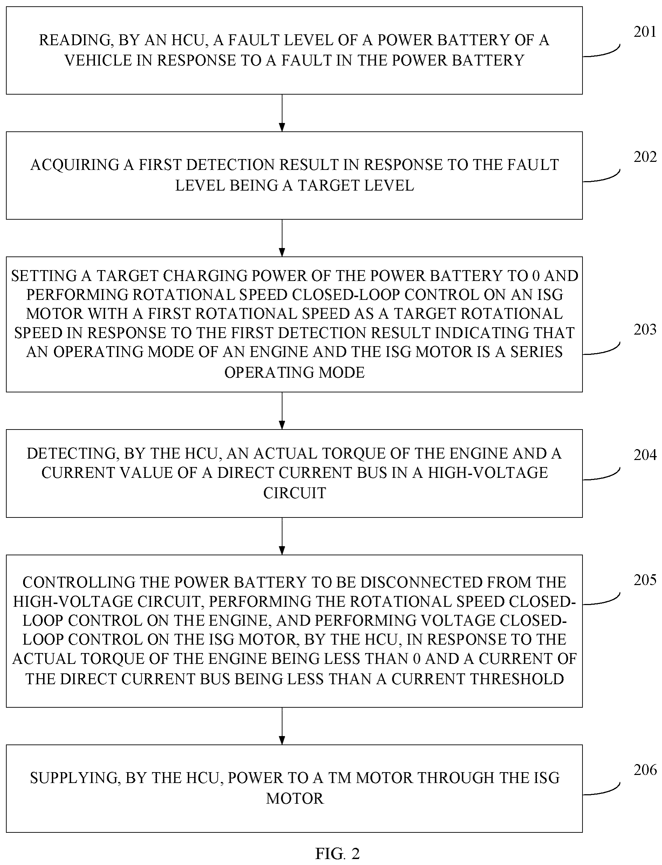

Based on the implementation environment illustrated in FIG. 1, the embodiments of the present disclosure provide a method for controlling a vehicle. As illustrated in FIG. 2, for example, the method is applied to an HCU, and the method includes step 201 to step 206.

In step 201, in response to a fault in a power battery of a vehicle, the HCU reads a fault level of the power battery.

Exemplarily, the HCU reads the battery state of the power battery from a BMS through the bus, where the battery state of the power battery includes: whether the power battery fails, and a fault content. Exemplarily, in response to the fault in the power battery of the vehicle, the HCU reads the fault level of the power battery, which includes: the HCU compares the fault content read from the BMS with preset failure contents corresponding to each fault level so as to determine the fault level of the power battery.

In a possible embodiment, the BMS checks whether the power battery fails and the fault content, where the check content involves at least one of the voltage, temperature, charging rate, discharging rate, charging capacity, or discharging capacity of the power battery. Optionally, the HCU reads the battery state of the power battery from the BMS through a CAN bus.

Optionally, the fault level of the power battery includes a first-level fault, a second-level fault, and a third-level fault, where the severity of the third-level fault is greater than the severity of the second-level fault, and the severity of the second-level fault is greater than the severity of the first-level fault.

Exemplarily, the preset first-level fault corresponds to a problem that the performance of the power battery slightly deteriorates. For example, the voltage of the power battery is abnormal, or the temperature thereof is too high or too low. The preset second-level fault corresponds to a problem that functions of the power battery are affected. For example, the charging rate or discharging rate of the power battery leads to a decrease in power output or a pause in charging. The preset third-level fault corresponds to a problem that most of the functions of the power battery are lost. For example, the power battery loses most of the charging and discharging capacity and can only provide less discharging capacity.

In step 202, in response to the fault level being a target level, a first detection result is acquired, where the first detection result indicates whether an operating mode of an engine and an ISG motor of the vehicle is a series operating mode.

In a possible embodiment, the target level is determined as the third-level fault, and in response to the fault level being the target level, the HCU acquires the first detection result, where the first detection result indicates whether the operating mode of the engine and the ISG motor of the vehicle is the series operating mode.

Exemplarily, acquiring the first detection result, includes: the HCU detects the connection manner between the ISG motor and the engine. In the case that the engine and the ISG motor are connected in series and then connected to the wheel through a TM motor, the first detection result indicates that the engine and the ISG motor are in the series operating mode. In the case that the engine and the ISG motor are not connected in series and then connected to the wheel through a TM motor, or the engine is not started, the first detection result indicates that the engine and the ISG motor are not in the series operating mode.

In step 203, in response to the first detection result indicating that the operating mode of the engine and the ISG motor of the vehicle is the series operating mode, the HCU sets a target charging power of the power battery to 0, such that the actual torque of the engine gradually decreases, and performs rotational speed closed-loop control on the ISG motor with a first rotational speed as the target rotational speed. The power battery is connected in a high-voltage circuit.

In a possible embodiment, in the case that it is determined that the first detection result indicates that the operating mode of the engine and the ISG motor of the vehicle is the series operating mode, the HCU sets the target charging power of the power battery to 0 to ensure that the power battery no longer receives energy from the engine, thereby causing the actual torque of the engine to gradually decrease. The power battery is connected in the high-voltage circuit.

Optionally, the HCU controls the rotational speed of a range extender by performing rotational speed closed-loop control on the ISG motor. Exemplarily, the HCU may set the target rotational speed of the ISG motor to the first rotational speed through the MCU. The first rotational speed is considered as a rotational speed threshold, which may be set by the driver, for example, set to 1500 revolutions per minute. The range extender, which includes an engine and an ISG motor, is configured to drive a TM motor so as to drive the wheel to rotate.

By setting the target charging power of the power battery to 0, the actual torque of the engine is gradually reduced to prevent excessive actual torque of the engine from causing excessive rotational speed of the engine and affecting the safe travel of the vehicle, in the case that the charging and discharging capacity of the power battery is affected due to a fault.

In another possible embodiment, in response to the first detection result indicating that the operating mode of the engine and the ISG motor is not the series operating mode, a second detection result is acquired, where the second detection result indicates whether the operating mode of the engine and the ISG motor is a parallel operating mode; and in response to the second detection result indicating that the operating mode of the engine and the ISG motor is the parallel operating mode, the operating mode of the engine and the ISG motor is switched to the series operating mode.

Optionally, in response to the first detection result indicating that the operating mode of the engine and the ISG motor is not the series operating mode, a second detection result is acquired, which includes: the second detection result indicates that the operating mode of the engine and the ISG motor is the parallel operating mode in the case that the engine and the ISG motor are connected to the wheel simultaneously; or the second detection result indicates that the operating mode of the engine and the ISG motor is not the parallel operating mode in the case that the engine and the ISG motor are not connected to the wheel simultaneously, or the engine is not started.

Exemplarily, after the second detection result is determined, in the case that the second detection result indicates that the operating mode of the engine and the ISG motor is the parallel operating mode, the operating mode of the engine and the ISG motor is controlled to be switched to the series operating mode. For example, the operating mode of the engine and the ISG motor can be switched from the parallel operating mode to the series operating mode by changing the connection manner between the engine and the ISG motor with the TM motor and the vehicle.

In another possible embodiment, in response to the second detection result indicating that the operating mode of the engine and the ISG motor is not the parallel operating mode, the engine is controlled to start at low power. Optionally, in the case that the second detection result indicates that the operating mode of the engine and the ISG motor is neither the parallel operating mode nor the series operating mode, it indicates that the engine is not started, because the power battery has lost most of the charging and discharging capacity. The engine is controlled to start at low power, which includes: the ISG motor is controlled to provide kinetic energy for the engine, where the kinetic energy provided by the engine is used for controlling the rotational speed of the engine to reach a second rotational speed, and the second rotational speed is the minimum rotational speed at which the engine maintains fuel injection and ignition; and the fuel injection and ignition of the engine is controlled in response to the rotational speed of the engine reaching the second rotational speed.

Exemplarily, the HCU controls the BMS to temporarily cancel the electric power consumption limit in the case of the third-level fault, and provides electric energy with low power, for example, electric power of 5 kilowatts, to the ISG motor through the power battery. Therefore, the ISG motor can convert a small amount of electric energy provided by the power battery into kinetic energy and transmits the kinetic energy to the engine, such that the rotational speed of the engine reaches the second rotational speed. The second rotational speed is considered as the minimum rotational speed at which the engine maintains fuel injection and ignition, and is determined based on the model of the engine. In the case that the rotational speed of the engine reaches the second rotational speed, the HCU controls the fuel injection and ignition of the engine through the EMS, thereby completing the startup of the engine.

In step 204, the HCU detects the actual torque of the engine and the current value of a direct current bus in the high-voltage circuit, where the direct current bus is configured to connect the power battery and the ISG motor.

Exemplarily, in the process that the actual torque of the engine starts to gradually decrease, the HCU detects the actual torque of the engine and the current value of the direct current bus in the high-voltage circuit, where the direct current bus is configured to connect the power battery and the ISG motor. In a possible embodiment, the HCU can acquire the actual torque of the engine from the EMS through the CAN bus, and acquire the current value of the direct current bus through a current sensor installed on the direct current bus.

By checking the actual torque of the engine and the current of the direct current bus, it is convenient to subsequently select a stable timing to disconnect a relay to prevent the relay from being disconnected and causing instability of the entire power system in the case that the actual torque of the engine and the current of the direct current bus are too high.

In step 205, in response to the actual torque of the engine being less than 0 and the current of the direct current bus being less than a current threshold, the HCU controls the power battery to be disconnected from the high-voltage circuit, performs the rotational speed closed-loop control on the engine, and performs voltage closed-loop control on the ISG motor.

Optionally, after the actual torque of the engine and the current of the direct current bus are acquired, the power battery is controlled to be disconnected from the high-voltage circuit in the case that the actual torque of the engine is less than 0 and the current of the direct current bus is less than the current threshold which includes: the HCU controls the disconnection of the relay such that the power battery is disconnected from the high-voltage circuit, so as to cut off the connection between the power battery and an external high-voltage circuit, thereby avoiding the power battery from being damaged due to overcharging or overdischarging in the case of losing most of the charging and discharging capacity.

Exemplarily, while the relay is disconnected, the rotational speed closed-loop control is performed on the engine and the voltage closed-loop control is performed on the ISG motor, which includes: the HCU performs the rotational speed closed-loop control on the engine through the EMS; and the HCU controls the ISG motor to enter an idle state from the rotational speed closed-loop control first, and then the HCU controls the ISG motor to enter the voltage closed-loop control to maintain the voltage of the high-voltage circuit after the relay is disconnected. In a possible embodiment, the closed-loop target rotational speed of the engine and the closed-loop target voltage of the ISG motor are set based on experience, for example, the closed-loop target voltage of the ISG motor may be set to 325 V.

Optionally, after the power battery is disconnected from the high-voltage circuit due to the disconnection of the relay, the engine is in the rotational speed closed-loop control mode and the ISG motor is in the voltage closed-loop control mode, such that the high-voltage circuit can still ensure the stability of the voltage of the direct current bus in the case of disconnecting the power battery, and can ensure the relative stability of the power system, thereby ensuring that the TM motor can still stably drive the vehicle to travel safely in the case that the power battery fails.

In step 206, the HCU supplies power to a TM motor through the ISG motor, where the TM motor is configured to drive the vehicle to travel.

In a possible embodiment, in the case that the engine is under the rotational speed closed-loop control and the ISG motor is under the voltage closed-loop control, the HCU supplies power to the TM motor, i.e., main drive motor, through the ISG motor, where the TM motor is configured to drive the vehicle to travel. Exemplarily, in the process of driving the vehicle, for ensuring a normal running of the vehicle in a short time, the HCU needs to limit the power distribution of the power system as follows: in the case that the voltage closed-loop control is performed on the ISG motor, the HCU limits the maximum electric power consumption of the ISG motor to 5 kilowatts and the minimum recovery power to -20 kilowatts; and in the case that the TM motor is powered through the ISG motor, the minimum recovery power of the TM motor is limited to 0, and the maximum electric power consumption of the TM motor is limited to a power threshold, where the power threshold is the sum of the generated power of the ISG motor and an offset value.

Optionally, the generated power of the ISG motor is equal to the rated power of the ISG motor multiplied by the efficiency of the ISG motor. An offset value is an electric energy consumption value of the BMS, other power systems, and other additional devices, which may be determined by experiments. Exemplarily, the minimum recovery power of the TM motor is limited to 0, such that the recovery function of the range extender for the TM motor is disabled, and the stability of the power system is prevented from being affected by an excessively high voltage of the direct current bus.

In a possible embodiment, the HCU transmits the actual power consumption value of the ISG motor to the EMS. After receiving the actual power consumption value of the ISG motor, the EMS adjusts the closed-loop target rotational speed of the engine based on the actual power consumption value of the ISG motor in the case of controlling the engine to perform the rotational speed closed-loop control, such that the closed-loop target rotational speed of the engine is set more accurately. The HCU may control the MCU to transmit the actual power consumption value of the TM motor to the ISG motor, and the ISG motor adjusts the closed-loop target voltage of the ISG motor based on the actual power consumption value of the TM motor, such that the closed-loop target voltage of the ISG motor is set more accurately.

Optionally, how to adjust the closed-loop target rotational speed of the engine based on the actual power consumption value of the ISG motor and how to adjust the closed-loop target voltage of the ISG motor based on the actual power consumption value of the TM motor may be preset according to experiments and experiences.

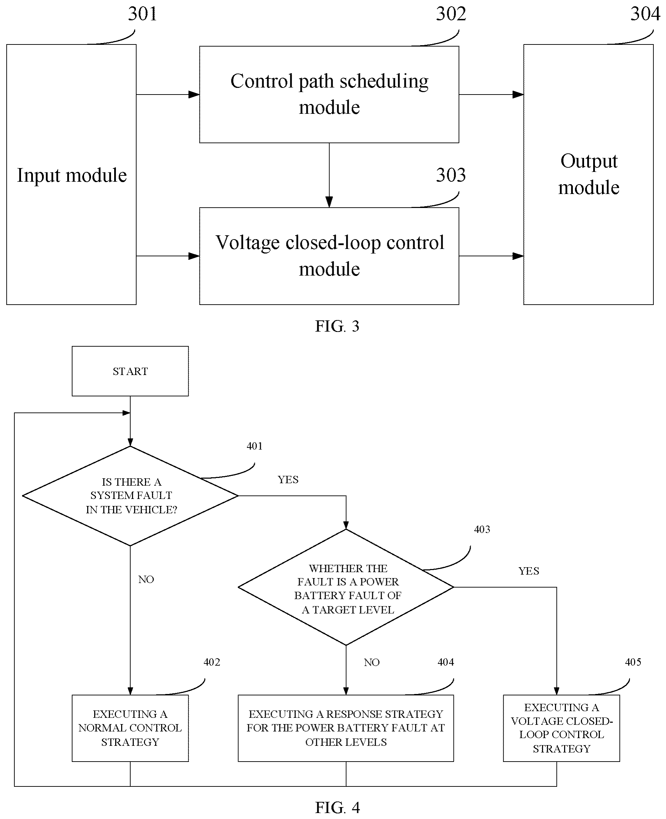

With reference to the above method processes, the schematic structural diagram of software for controlling a vehicle according to some embodiments of the present disclosure illustrated in FIG. 3 is used as an example for description. The execution body may be an HCU. An input module 301 is configured to acquire input signals required to be used, including but not limited to, a fault level of a power battery, actual torque of an engine, a current value of a direct current bus, and an operating state of an ISG motor. A control path scheduling module 302 determines different fault response methods based on the fault level of the power battery and fault levels of other components.

Optionally, a voltage closed-loop control module 303 is configured to coordinately control the operating states, power distribution, and torque outputs of the engine and the ISG motor, so as to ensure that the TM motor can still stably drive the vehicle to travel safely in the case that the power battery fails. An output module 304 is configured to transmit control commands, such as an operating state requested by the engine, a closed-loop control rotational speed requested by the engine, an operating state requested by the ISG motor, and a closed-loop control torque requested by the ISG motor, to other controllers.

With reference to the above method processes, the schematic flowchart of software for controlling a vehicle according to some embodiments of the present disclosure illustrated in FIG. 4 is used as an example for description. The execution body may be an HCU. In step 401, it is determined whether there is a system fault in the vehicle. In the case that there is no system fault in the vehicle, the process proceeds to step 402. In step 402, a normal control strategy is executed. In the case that there is a system fault in the vehicle, the process proceeds to step 403. In step 403, it is determined whether the existing fault is a power battery fault at a target level.

In the case that the existing fault is not the power battery fault at the target level, the process proceeds to step 404. In step 404, a response strategy for the power battery fault at other levels is executed. In the case that the existing fault is the power battery fault at the target level, the process proceeds to step 405. In step 405, a voltage closed-loop control strategy is executed. After any one of step 402, step 404, or step 405 is completed, the process returns to the beginning of the procedure and is repeated.

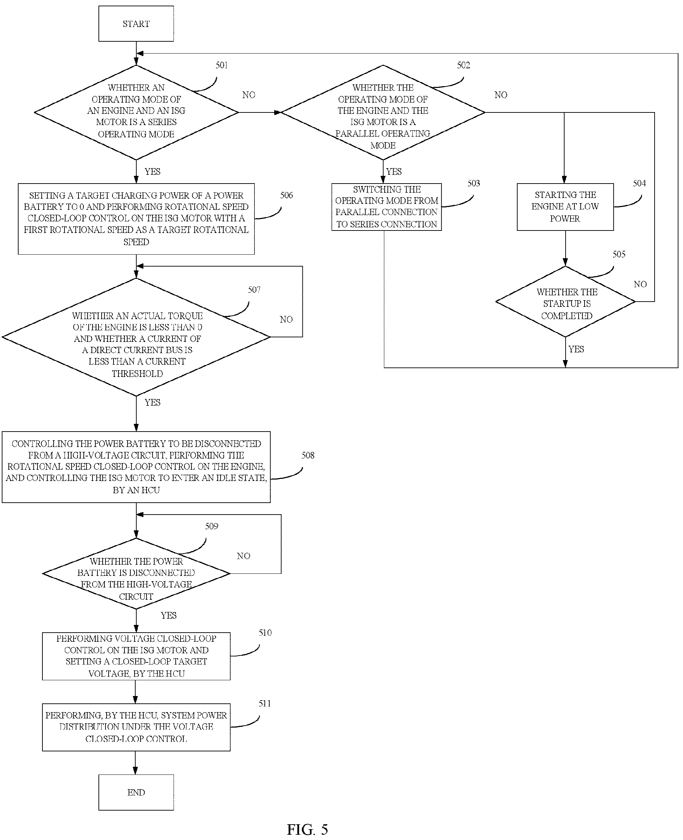

With reference to the above method processes, the schematic diagram of vehicle control logic according to some embodiments of the present disclosure illustrated in FIG. 5 is used as an example for description. The execution body may be an HCU. In step 501, it is determined whether an operating mode of the engine and the ISG motor is a series operating mode. In the case that the operating mode of the engine and the ISG motor is not the series operating mode, the process proceeds to step 502. In step 502, it is determined whether the operating mode of the engine and the ISG motor is a parallel operating mode. In the case that the operating mode of the engine and the ISG motor is the parallel operating mode, the process proceeds to step 503. In step 503, the operating mode is switched from parallel connection to series connection, and then step 501 is repeated. In the case that the operating mode of the engine and the ISG motor is not the parallel operating mode, the process proceeds to step 504, and the engine is started at low power. In step 505, it is determined whether the engine completes the startup, and in the case that the engine does not complete the startup, step 504 is repeated. In the case that the engine completes the startup, step 501 is repeated.

In the case that the operating mode of the engine and the ISG motor is the series operating mode, the process proceeds to step 506. The target charging power of the power battery is set to 0, and rotational speed closed-loop control is performed on the ISG motor with a first rotational speed as the target rotational speed. In step 507, it is determined whether the actual torque of the engine is less than 0 and whether the current of the direct current bus is less than a current threshold. In the case that at least one of the actual torque of the engine being less than 0 or the current of the direct current bus being less than the current threshold is not satisfied, step 507 is repeated.

In the case that the actual torque of the engine is less than 0 and the current of the direct current bus is less than the current threshold, the process proceeds to step 508, where HCU controls the power battery to be disconnected from the high-voltage circuit, performs the rotational speed closed-loop control on the engine, and controls the ISG motor to enter an idle state. In step 509, it is determined whether the power battery is disconnected from the high-voltage circuit. In the case that the power battery is not disconnected from the high-voltage circuit, step 509 is repeated. In the case that the power battery is disconnected from the high-voltage circuit, the process proceeds to step 510, where HCU performs voltage closed-loop control on the ISG motor and sets a closed-loop target voltage. In step 511, the HCU performs system power distribution under the voltage closed-loop control.

In the embodiments of the present disclosure, in the case that a fault at the target level occurs in the power battery of the vehicle, it is ensured whether the operating mode of the engine and the ISG motor of the vehicle is the series operating mode. Then the target charging power of the power battery is set to 0, such that the actual torque of the engine is gradually reduced, to prevent excessive actual torque of the engine from causing excessive rotational speed of the engine and affecting the safe travel of the vehicle, in the case that the charging and discharging capacity of the power battery is affected due to a fault.

In the case that the actual torque of the engine is less than 0 and the current of the direct current bus is less than the current threshold, the power battery is controlled to be disconnected from the high-voltage circuit, so as to prevent a relay from being disconnected and causing instability in the entire power system in the case that the actual torque of the engine and the current of the direct current bus are too high. As a result, the safety of the operation of disconnecting the power battery is ensured. While disconnecting the power battery, the engine is controlled to enter the rotational speed closed-loop control mode and the ISG motor is controlled to enter the voltage closed-loop control mode, such that the stability of the voltage of the direct current bus can still be ensured in the case of disconnecting the power battery, thereby ensuring that the TM motor can still stably drive the vehicle to travel safely in the case that the power battery fails.

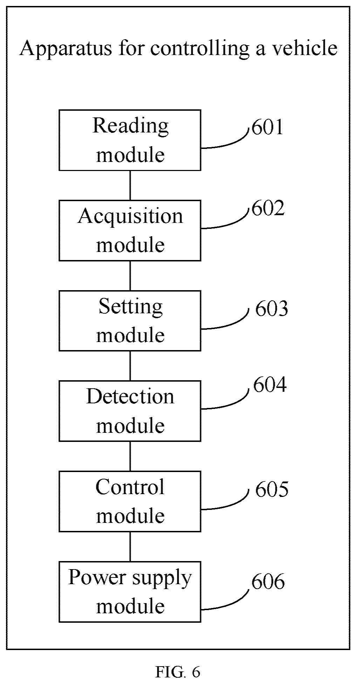

Referring to FIG. 6, the embodiments of the present disclosure provide an apparatus for controlling a vehicle. The apparatus includes:
a reading module 601, configured to read a fault level of the power battery of a vehicle in response to a fault in the power battery;
an acquisition module 602, configured to acquire a first detection result in response to the fault level being a target level, where the first detection result indicates whether the operating mode of an engine and an ISG motor of the vehicle is a series operating mode;
a setting module 603, configured to set the target charging power of the power battery connected in a high-voltage circuit to 0, such that the actual torque of the engine gradually decreases, and perform rotational speed closed-loop control on the ISG motor with a first rotational speed as the target rotational speed in response to the first detection result indicating that the operating mode of the engine and the ISG motor is the series operating mode;
a detection module 604, configured to detect the actual torque of the engine and the current value of a direct current bus in the high-voltage circuit, where the direct current bus is configured to connect the power battery and the ISG motor;
a control module 605, configured to control the power battery to be disconnected from the high-voltage circuit, perform the rotational speed closed-loop control on the engine, and perform voltage closed-loop control on the ISG motor in response to the actual torque of the engine being less than 0 and the current of the direct current bus being less than a current threshold; and
a power supply module 606, configured to supply power to a TM motor through the ISG motor, where the TM motor is configured to drive the vehicle to travel.

In a possible embodiment, the acquisition module 602 is further configured to: acquire a second detection result in response to the first detection result indicating that the operating mode of the engine and the ISG motor is not the series operating mode, where the second detection result indicates whether the operating mode of the engine and the ISG motor is a parallel operating mode; and switch the operating mode of the engine and the ISG motor to the series operating mode in response to the second detection result indicating that the operating mode of the engine and the ISG motor is the parallel operating mode.

In a possible embodiment, the acquisition module 602 is further configured to control the engine to start at low power in response to the second detection result indicating that the operating mode of the engine and the ISG motor is not the parallel operating mode.

In a possible embodiment, the acquisition module 602 is configured to control the ISG motor to provide kinetic energy for the engine, such that the rotational speed of the engine reaches the minimum rotational speed at which fuel injection and ignition are maintained; and control the fuel injection and ignition of the engine in response to the rotational speed of the engine reaching the minimum rotational speed at which the fuel injection and ignition are maintained.

In a possible embodiment, the apparatus further includes a first limiting module, configured to limit the maximum electric power consumption of the ISG motor to 5 kilowatts and the minimum recovery power of the ISG motor to -20 kilowatts in the case that the voltage closed-loop control is performed on the ISG motor.

In a possible embodiment, the apparatus further includes a second limiting module, configured to limit the minimum recovery power of the TM motor to 0 and limit the maximum electric power consumption of the TM motor to a power threshold in the case that the TM motor is powered through the ISG motor, where the power threshold is the sum of the generated power of the ISG motor and an offset value.

The apparatus ensures whether the operating mode of the engine and the ISG motor of the vehicle is the series operating mode in the case that a fault at the target level occurs in the power battery of the vehicle. Then the target charging power of the power battery is set to 0, such that the actual torque of the engine is gradually reduced, to prevent excessive actual torque of the engine from causing excessive rotational speed of the engine and affecting the safe travel of the vehicle, in the case that the charging and discharging capacity of the power battery is affected due to a fault.

In the case that the actual torque of the engine is less than 0 and the current of the direct current bus is less than the current threshold, the power battery is controlled to be disconnected from the high-voltage circuit, so as to prevent a relay from being disconnected and causing instability in the entire power system in the case that the actual torque of the engine and the current of the direct current bus are too high. As a result, the safety of the operation of disconnecting the power battery is ensured. While disconnecting the power battery, the engine is controlled to enter the rotational speed closed-loop control mode and the ISG motor is controlled to enter the voltage closed-loop control mode, such that the stability of the voltage of the direct current bus can still be ensured in the case of disconnecting the power battery, thereby ensuring that the TM motor can still stably drive the vehicle to travel safely in the case that the power battery fails.

It should be noted that in the case that the apparatus according to the above embodiments implements the functions thereof, the division of the functional modules is merely exemplary. In practical applications, the above functions can be assigned to different functional modules as needed, that is, the internal structure of the device may be divided into different functional modules, so as to implement all or a part of the above functions. In addition, the apparatus and the method according to the above embodiments belong to the same concept, and specific implementation processes thereof are described in the method embodiments in detail, and are not repeated herein.

In some embodiments, a computer-readable storage medium is further provided. The computer-readable storage medium stores at least one computer program. The at least one computer program, when loaded and run by a processor of a computer device, causes the computer to perform any one of the methods for controlling a vehicle described above.

In some embodiments, the above computer-readable storage medium is a read-only memory (ROM), a random access memory (RAM), a compact disc read-only memory (CD-ROM), a magnetic tape, a floppy disk, an optical data storage device, or the like.

In some embodiments, a computer program product or a computer program is further provided. The computer program product or the computer program includes one or more computer instructions. The one or more computer instructions are stored in a computer-readable storage medium. The one or more computer instructions, when read from the computer-readable storage medium by a processor of a computer device and executed by the processor, cause the computer device to perform any one of the methods for controlling a vehicle described above.

It should be noted that the information (including but not limited to user device information, user personal information, and the like), data (including but not limited to data for analysis, stored data, displayed data, and the like), and signals, which are referred to in the present disclosure, are authorized by the user or fully authorized by various parties, and the collection, use, and processing of the relevant data are required to comply with relevant laws and regulations and standards in relevant countries and regions. For example, the fault level of the power battery, the operating mode of the engine and the ISG motor of the vehicle, the actual torque of the engine, the current value of the direct current bus, the rotational speed value of the engine, and the voltage value of the ISG motor, which are referred to in the present disclosure, are all acquired with full authorization.

It should be understood that the term "a plurality of" herein means two or more. The term "and/or" describes the association relationship between the associated objects and indicates that three relationships may be present. For example, A and/or B may indicate that: only A is present, both A and B are present, and only B is present. The symbol "/" generally indicates an "or" relationship between the associated objects.

It should be noted that the terms "first", "second", or the like (if present) in the specification and claims of the present disclosure are configured to distinguish similar objects, and do not have to be used to describe a specific order or sequence. It should be understood that the data so used is interchangeable under appropriate circumstances such that the embodiments of the present disclosure described herein are capable of implementation in other sequences than those illustrated or described herein. The embodiments described in the following exemplary embodiments do not represent all embodiments consistent with the present disclosure. Rather, they are merely examples of apparatus and methods consistent with some aspects of the present disclosure, as detailed in the appended claims.

Described above are merely exemplary embodiments of the present disclosure and are not intended to limit the present disclosure. Any modifications, equivalent substitutions, improvements, and the like, made within the principle of the present disclosure should fall within the protection scope of the present disclosure.

## Claims

1. A method for controlling a vehicle, comprising:
reading a fault level of a power battery of a vehicle in response to a fault in the power battery;
acquiring a first detection result in response to the fault level being a target level, wherein the first detection result indicates whether an operating mode of an engine and an integrated starter generator (ISG) motor of the vehicle is a series operating mode;
setting a target charging power of the power battery to 0 such that an actual torque of the engine gradually decreases, and performing rotational speed closed-loop control on the ISG motor with a first rotational speed as a target rotational speed, in response to the first detection result indicating that the operating mode of the engine and the ISG motor is the series operating mode, wherein the power battery is connected in a high-voltage circuit;
detecting the actual torque of the engine and a current value of a direct current bus in the high-voltage circuit, wherein the direct current bus is configured to connect the power battery and the ISG motor;
controlling the power battery to be disconnected from the high-voltage circuit, performing the rotational speed closed-loop control on the engine and performing voltage closed-loop control on the ISG motor, in response to the actual torque of the engine being less than 0 and a current of the direct current bus being less than a current threshold; and
supplying power to a traction motor (TM) motor by the ISG motor, wherein the TM motor is configured to drive the vehicle to travel.

2. The method according to claim 1, wherein after acquiring the first detection result, the method further comprises:
acquiring a second detection result in response to the first detection result indicating that the operating mode of the engine and the ISG motor is not the series operating mode, wherein the second detection result indicates whether the operating mode of the engine and the ISG motor is a parallel operating mode; and
switching the operating mode of the engine and the ISG motor to the series operating mode in response to the second detection result indicating that the operating mode of the engine and the ISG motor is the parallel operating mode.

3. The method according to claim 2, wherein after acquiring the second detection result, the method further comprises:
controlling the engine to start at low power in response to the second detection result indicating that the operating mode of the engine and the ISG motor is not the parallel operating mode.

4. The method according to claim 3, wherein controlling the engine to start at low power, comprises:
controlling the ISG motor to provide kinetic energy for the engine, wherein the kinetic energy provided by the engine is used for controlling a rotational speed of the engine to reach a second rotational speed, and the second rotational speed is a minimum rotational speed at which the engine maintains fuel injection and ignition; and
controlling the fuel injection and ignition of the engine in response to the rotational speed of the engine reaching the second rotational speed.

5. The method according to claim 1, wherein the method further comprises:
limiting a maximum electric power consumption of the ISG motor to 5 kilowatts and a minimum recovery power to -20 kilowatts, in a case that the voltage closed-loop control is performed on the ISG motor.

6. The method according to claim 1, wherein the method further comprises:
limiting a minimum recovery power of the TM motor to 0 and limiting a maximum electric power consumption of the TM motor to a power threshold, in a case that the TM motor is powered by the ISG motor, wherein the power threshold is a sum of a generated power of the ISG motor and an offset value.

7. An apparatus for controlling a vehicle, comprising:
a reading module, configured to read a fault level of a power battery of a vehicle in response to a fault in the power battery;
an acquisition module, configured to acquire a first detection result in response to the fault level being a target level, wherein the first detection result indicates whether an operating mode of an engine and an ISG motor of the vehicle is a series operating mode;
a setting module, configured to set a target charging power of the power battery to 0 and perform rotational speed closed-loop control on the ISG motor with a first rotational speed as a target rotational speed, in response to the first detection result indicating that the operating mode of the engine and the ISG motor is the series operating mode, wherein the power battery is connected in a high-voltage circuit, and the target charging power is used for controlling an actual torque of the engine to gradually decrease;
a detection module, configured to detect the actual torque of the engine and a current value of a direct current bus in the high-voltage circuit, wherein the direct current bus is configured to connect the power battery and the ISG motor;
a control module, configured to control the power battery to be disconnected from the high-voltage circuit, perform the rotational speed closed-loop control on the engine, and perform voltage closed-loop control on the ISG motor, in response to the actual torque of the engine being less than 0 and a current of the direct current bus being less than a current threshold; and
a power supply module, configured to supply power to a TM motor by the ISG motor, wherein the TM motor is configured to drive the vehicle to travel.

8. The apparatus according to claim 7, wherein the acquisition module is further configured to:
acquire a second detection result in response to the first detection result indicating that the operating mode of the engine and the ISG motor is not the series operating mode, wherein the second detection result indicates whether the operating mode of the engine and the ISG motor is a parallel operating mode; and
switch the operating mode of the engine and the ISG motor to the series operating mode in response to the second detection result indicating that the operating mode of the engine and the ISG motor is the parallel operating mode.

9. A computer program product, wherein the computer program product comprises computer instructions, and the computer instructions, when loaded and executed by a processor, cause the processor to perform steps of the method for controlling a vehicle as defined in any one of claims 1 to 6.

10. A non-transitory computer-readable storage medium, wherein the computer-readable storage medium stores at least one computer program, and the at least one computer program, when loaded and run by a processor, causes a computer to perform the method for controlling a vehicle as defined in any one of claims 1 to 6.
